# EUROPEAN PATENT SPECIFICATION

(11) **EP 0 109 614 B1**
(45) Date of publication and mention of the grant of the patent: **28.09.1994**
(21) Application number: 83111221.4
(22) Date of filing: 10.11.1983
(51) Int. Cl.: G06F 15/20

(54) **Methodology for transforming a first editable document form prepared by an interactive text processing system to a second editable document form usable by an interactive or batch text processing system**
Verfahren zur Umwandlung einer ersten editierbaren Dokumentenform, vorbereitet von einem interaktiven Textverarbeitungssystem, in eine zweite editierbare Dokumentenform, die für ein Interaktiv- oder Stapeltextverarbeitungssystem brauchbar ist
Méthode pour transformer un premier formulaire éditable, préparé par un système interactif processeur de texte, en un second formulaire éditable, utilisable par un système de traitement interactif ou différé de texte

(30) Priority: 18.11.1982 US 442827
(43) Date of publication of application: 30.05.1984
(73) Proprietor: International Business Machines Corporation, Armonk, N.Y. 10504 (US)
(72) Inventor: Agnew, Palmer Wright, Owego, NY 13827 (US); Erhard, John Joseph, Binghamton, NY 13902 (US); Kellerman, Anne Sheila, Endicott, NY 13760 (US)
(74) Representative: Schäfer, Wolfgang, Dipl.-Ing.

(56) References cited:
- EP-A- 0 042 895
- GB-A- 1 537 429
- IBM TECHNICAL DISCLOSURE BULLETIN, vol. 22, no. 6, November 1979, page 2218,New York, US; D.A. HAMILTON et al.: "Format control using keyword expansion"
- IBM TECHNICAL DISCLOSURE BULLETIN, vol. 24, no. 7A, December 1981, pages 3557,3558, New York, US; B.W. LEE et al.: "Preview of communication deletions"

## Description

### Background of the Invention

### 1. Field of the Invention

This invention is concerned with a methodology for transforming editable documents cast in a first form by and for use in an interactive text processing system into a second editable form for use in and by another text processing system, either of the interactive or batch type, in which said first form is otherwise incompatible. More particularly, this invention is directed to achieving the requisite transformation between dissimilar forms of an editable document by utilizing a methodology that effects the transform of an input item from the interactive source form to an explicit set of output items for the editable target document form based on suitably selected state variables representing conditions of the source document form at the point of transformation.

### 2. Description of the Prior Art

Several different forms are known and commonly used for representing editable or revisable documents in information handling systems. Some examples are OIIA L3 used by Displaywriter and 5520 Systems, a form often called "Two-Baker" used by 3790 and DOSF/DPCX/8100, and the DCF input form used by Document Composition Facility and Professional Office System. Displaywriter is a word processor, capable of and primarily intended for stand-alone operation, manufactured and sold by International Business Machines Corporation (IBM Corporation). It is a type of text processor commonly known as a "what you see is what you get" or interactive system. The 5520 is a shared logic, multi-station text processing and office communication system that is also sold by IBM Corporation. The 3790, classifiable as a minicomputer, is an intelligent text processing system. The 8100, which is also classifiable as a minicomputer, is adapted, using DOSF, a text processing package, and DPCX, a special operating system, to function as a text processing system. Both the 3790 and 8100 are manufactured and sold by IBM Corporation. Document Composition Facility (DCF) orSCRIPT/VS is a text processing program product sold by IBM Corporation. The Professional Office System or PROFS is a menu driven program product sold by IBM Corporation that is designed and particularly suitable for handling and managing a wide spectrum of office related tasks. It includes text processing capabilities that utilize the DCF form of editable text representation. In this type of text processing system, the operator imbeds textual matter in the document that is subsequently interpreted as one or more formatting commands and is retained in the editable document form as textual matter. This document form, when subsequently interpreted, is formatted as a whole document or batch processed.

These are several of the available text processing systems from IBM Corporation that can be employed to create, manipulate and format editable documents. There are also many other fine text processing systems and software support therefor available from other suppliers. Due to the overwhelming number of text processing systems now available, it is not uncommon to have a diverse mix of different text processors at any particular installation (see e.g. GB-A-1537429). However, due to incompatibilty in and between the editable documents produced by the various text processing systems, it has been extremely difficult to provide a document form transformation capability for different people who need to cooperate in creating and editing a given document. Further, that need contemplates that each party involved in editing the document be provided with several opportunities to do so. This need cannot be efficiently or effectively supported in an operating environment that uses text processors having impenetrable system boundaries.

There are obvious and important benefits to be derived from transforming documents generated in a known form by a first text processing system, into another form that is useable and fully editable on a different text processing system. Without such transformation capability, documents prepared on any one of the known systems are meaningless to and unmodi- fiable by users of other systems. However, the provision of a transformation capability is not a straightforward or simple endeavor. It will be understood by those having skill in this art that the required transformation facility necessary to permit a first form document to be converted into a second form document that can be edited on a different and otherwise incompatible text processing system involves more than just a mere one-for-one replacement or substitution formula.

One known prior art example of a transformation methodology is provided by the Document Interchange Facility or DIF. This IBM Corporation program product is provided to convert "Two-Baker" form editable files into DCF form files by using uniquely defined SCRIPT macros. These macros essentially invoke a block of information for each of the "Two-Baker" commands encountered, but the substituted material is not an equivalent DCF command. While it does permit a final formatted version of the original "Two-Baker" document to be produced by a DCF based text processing system using the translated file containing these macros, this DIF converted data stream cannot be easily edited or effectively manipulated because that data stream is atypical, it is not a normal DCF file. This approach permits the formatting of a document cast in a first editable form in a text processor designed-for documents of a second form, but does not allow for editing of the "transformed" document at any point prior thereto.

### Objects and Summary of the Invention

Accordingly, it is a principal object of the present invention to provide a methodology for transforming a document cast in a source editable form by an interactive text processing system, which form is suitable for editing or formatting only in said interactive text processing system, into another editable or target form that is fully suitable for editing and formatting in any other type of targeted text processing system.

It is also a principal object of the present invention to provide such a methodology wherein said transformation is transparent to the users of said text processing systems and does not require their intervention to effect the transformation.

It is another object of the present invention to provide methods of transforming a data stream from one document form to another in a quick and efficient manner that does not unnecessarily tie up system resources.

It is yet another object of the present invention to provide such methods wherein the second document form produced by said transformation is explicit and clear, having no impediments to editability thereof by a user of said targeted text processing system.

These and other objects of the present invention as claimed are achieved by a methodology of transformation wherein a fixed number of key state variables are identified. These key state variables refer to and collectively identify the status of a source document as represented by its data stream at any given point in the transformation process. The actual number of possible states or key variable combinations is then determined. Thereafter, for each possible state and for each possible source input item, an explicit set of output items and the next state is defined. It will also be necessary to determine, at some point, the actual state that exists at the start of each source document prior to enabling transformation. Finally, if appropriate, the handling of sub-documents, such as margin text, is specified for transformation purposes including, but not limited to the pre-sub-document text variable information to be preserved for use after its transformation has taken place.

### Brief Description of the Drawings

The invention will be described further, by way of a preferred example thereof, with reference to the accompanying drawings wherein like reference numerals have been used in the several views to depict like elements, in which:
Figure 1 depicts a generalized decision table showing a tabulated summary of the transformation resulting from the presence of a particular input item in a first editable document form, as said transformation is made to a second such form pursuant to a set of rules therefor, set out in the table's columns, all in accordance with the methodology of the present invention;
Figure 2 schematically illustrates a generalized representation of the table shown in Figure 1 and constitutes a state transition diagram forthe input item summarized therein;
Figure 3 schematically illustrates a simplified representation of a unified but separable configuration of two text processing systems adapted to transfer and then transform editable documents from one text processing system to the other in accordance with the subject invention;
Figure 4 illustrates a table showing a tabulated summary of the states of several key state variables which are utilized in concert to define the necessary state information that is then employed to effect transformation from a first form of an editable document to a second and independent editable form, showing initial values and values after a word delimiter (WD) and after a non-word delimiter (NWD), all in accordance with the methodology of the present invention;
Figures 5 and 6 show, in tabular form, the various implications and relations arising out of the presence and role of the Figure 4 state variables;
Figure 7 schematically illustrates a state transition diagram for the tables shown in Figures 5 and 6;
Figure 8 illustrates a decision table showing a tabulated summary of the transformation resulting from the presence of the CRE input item in the first editable document form, as said transformation is made to a second form of an editable document, pursuant to the set of rules in the table's columns;
Figure 9 schematically depicts the transformation that is described in the table shown in Figure 8 and constitutes a state transition diagram for the CRE input item summarized therein;
Figure 10 illustrates a decision table showing a tabulated summary of the transformation resulting from the presence of the RCR or IRT input items in the first editable document form, as said transformation is made to a second form of an editable document, pursuant to the set of rules in the table's columns;
Figure 11 schematically depicts the transformation that is described in the table shown in Figure 10 and constitutes a state transition diagram for the RCR or IRT input items summarized therein;
Figure 12 illustrates a decision table showing a tabulated summary of the transformation resulting from the presence of the ZICR input item in the first editable document form, as said transformation is made to a second form of an editable document, pursuant to the set of rules in the table's columns;
Figure 13 schematically depicts the transformation that is described in the table shown in Figure 12 and constitutes a state transition diagram for the ZICR input item summarized therein;
Figure 14 illustrates a decision table showing a tabulated summary of the transformation resulting from the presence of the PE input item in the first editable document form, as said transformation is made to a second form of an editable document, pursuant to the set of rules in the table's columns;
Figure 15 illustrates a decision table showing a tabulated summary of the transformation resulting from the presence of the RPE input item in the first editable document form, as said transformation is made to a second form of an editable document, pursuant to the set of rules in the table's columns;
Figure 16 schematically depicts the transformation that is described in the table shown in Figure 15 and constitutes a state transition diagram for the RPE input item summarized therein;
Figure 17 illustrates a decision table showing a tabulated summary of the transformation resulting from the presence of the LFC or RMLF input items in the first editable document form, as said transformation is made to a second form of an editable document, pursuant to the set of rules in the table's columns;
Figure 18 schematically depicts the transformation that is described in the table shown in Figure 17 and constitutes a state transition diagram for the LFC or RMLF input items summarized therein;
Figure 19 illustrates a decision table showing a tabulated summary of the transformation resulting from the presence of the RSP, UBS, NBS or BS input items in the first editable document form, as said transformation is made to a second form of an editable document, pursuant to the set of rules in the table's columns;
Figure 20 schematically depicts the transformation that is described in the table shown in Figure 19 and constitutes a state transition diagram for the RSP, UBS, NBS or BS input items summarized therein;
Figure 21 illustrates a decision table showing a tabulated summary of the transformation resulting from the presence of the APM, AAM, TUFC or RTMF input items in the first editable document form, as said transformation is made to a second form of an editable document, pursuant to the set of rules in the table's columns;
Figure 22 schematically depicts the transformation that is described in the table shown in Figure 21 and constitutes a state transition diagram for the APM, AAM, TUFC or RTMF input items summarized therein;
Figure 23 sets forth a table showing a tabulated summary of certain state variables at the conclusion of margin text definition;
Figure 24 illustrates a decision table showing a tabulated summary of the transformation resulting from the presence of the ATF input item in the first editable document form, as said transformation is made to a second form of an editable document, pursuant to the set of rules in the table's columns; and
Figure 25 schematically depicts the transformation that is described in the table shown in Figure 24 and constitutes a state transition diagram for the ATF input item summarized therein;

### Description of the Preferred Embodiment

As used herein, the term "transform mechanism" refers to a collection of software and hardware which in its entirety represents a state machine that takes its input from a source document form and transforms that input in accordance with predefined state transition diagrams and tables into an explicit target document form. Both the source and target document forms are fully editable, although incompatible, hence the need for transformation. In addition, the phrases "editable document form", "DCF document form", "L3 document form" and "document data stream" are all intended to be and are used herein as equivalent descriptors for the editable version of a particular document in the indicated form, as it exists on a user's disk or diskette or in transfer between two text processing systems.

As previously noted, there are several different and incompatible forms used in which an editable document can be represented. However, due to inherent disparities between forms, it is impossible to readily move editable document data streams from one text processor to another for editing purposes although the advantages to be gleaned thereby would be significant. The typical mix of incompatible text processing systems, in even a modest installation and the investment they represent, renders such a capability important. It would be particularly advantageous to be able to move a document from a first text processing system to a second and back again, or even to a third or fourth type text processor, as many times as would be needed, to effect creation and complete editing of the document, without concern for the incompatibility of the respective 5 document forms.

The generalized aspects of the methodology utilized to achieve such benefits and advantages in accordance with the present invention contemplates that each input item, such as a text character or a formatting control item, from the source document form be transformed into one or more output items based on both the nature of the input item itself and the "state" of the transform mechanism that exists when the input item is encountered therein. The methodology used additionally changes the state of the transform mechanism to a new state as a result of each input item encountered, depending also on the state that existed when a particular input item was transformed. One particular application of the present invention relies on selecting a sufficient set of state variables to represent the state of the source document at any point; i.e., before any input item in the document. The transformation of each input item must depend on nothing other than the identity of that item and the values of these state variables at the time the input item is encountered. Moreover, there must be a uniquely defined value for each of these state variables after each input item is transformed into one or more output items. This method allows a transform to be described by one decision table for each input item. In addition, each decision table can correspond to a state transition diagram, which represents the same information in a form that is easier to check for correctness. This concept of selecting only a few key variables from amongst the many available makes the entire methodology tenable. Without that strategy, a transform mechanism would have to keep track of all preceding characters in the data stream, an awesome task.

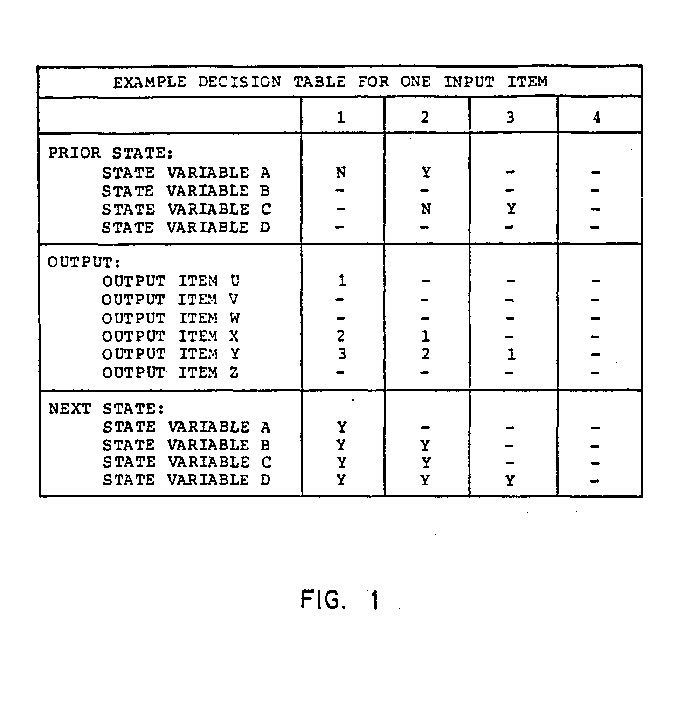

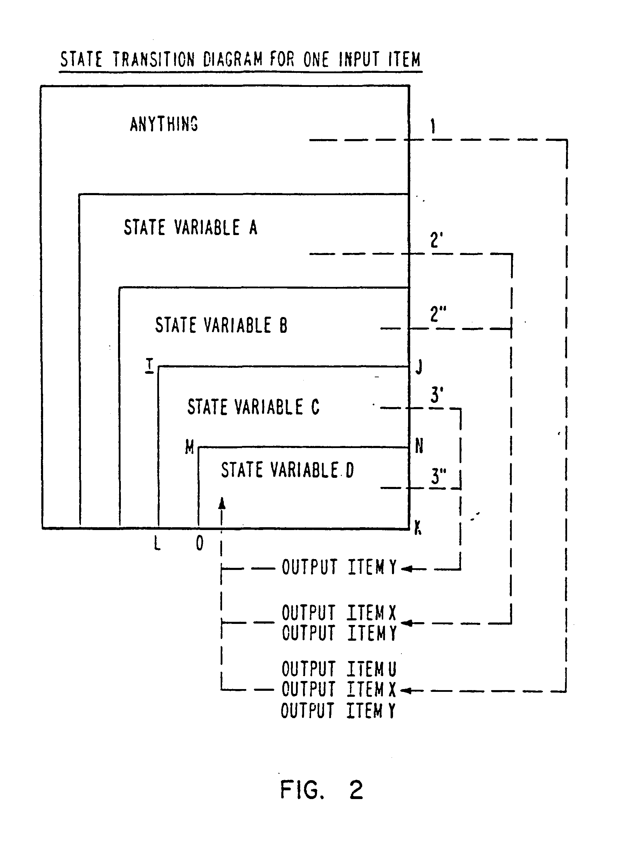

The general layout of the decision table and a state transition diagram suitable for use with the disclosed methodology is illustrated in Figures 1 and 2. As shown therein, it is possible to describe the transformation of a given input item into one, two, or three output items, the number and nature of output items depending on the values of the state variables when the input item is encountered. In the exemplary decision table of Figure 1, each of the numbered columns is a "rule". A rule is "satisfied" if the values of the state variables match the letters in the "prior state" portion of the table; i.e., if each variable having a letter "Y" associated therewith is true and each variable having a letter "N" associated therewith is false. Avariable having the symbol "-" (a dash) associated therewith in the proper column may be either true or false. This does not affect satisfaction of the column rule in which this symbol appears. The rest of the decision table indicates what is to be done when a given rule is satisfied; i.e., what output items are to be written (in the order given by the numerals 1, 2, 3, etc.) and which state variables to set (Y) or reset (N).

In the state transition diagram shown in Figure 2, a given state variable is true inside its own rectangle and false outside that rectangle. For example, STATE VARIABLE C, defined by the rectangle IJKL, is true whenever STATE VARIABLE D, defined by rectangle MNKO, is true. However, the converse is not always true since C may be true outside of rectangle MNKO, where D is not. Further, exiting from the rectangle defining any one of the given variables requires the implemented system to follow the indicated transformation paths. For example, the path from STATE VARIABLE A leads, via rule or condition 2' through the transform yielding the output items X and Y, to STATE VARIABLE D. This means that the presence of a given input item in a first editable form of a document, given that A is true, that B, Cand D are false, and that condition 2' is followed, leads to an explicit transformation and another specific state.

In the state transition diagram of Figure 2, each possible transformation of the given input item is represented by a dashed line. This line starts at a possible prior state, passes through a list of output items to be written to the target form when the given input item is encountered in that state, and ends at the required next state. By use of the disclosed transformation method, the main part of a transformation can be described in a decision table and/or a state transition diagram for each input item. In practice, the transformations are so complicated that both forms of description are necessary to understand the transformation well enough to check it, even though the decision table alone is sufficient for a programmer to program the transformation.

This method has been applied successfully to the transformation of an editable document from OIIA L3 form to DCF form. The present invention shall therefore be described herein using both the general and related specific aspects of this transformation as an explanatory vehicle. OIlAL3, or Office Information Interchange Architecture Level 3, an IBM Corporation designation, is one document data stream form previously mentioned. It shall hereinafter be referred to as L3. It is the form used in IBM Corporation's Displaywriter. DCF, or Document Composition Facility, another IBM Corporation designation, is another document data stream form that was also previously mentioned. This is the form used for representing editable documents using SCRIPT/VS, for example, in a VM environment on an IBM Corporation System/370 data processor. The actual state variables, decision tables and state transition diagrams for this particular transform are hereinafter separately described.

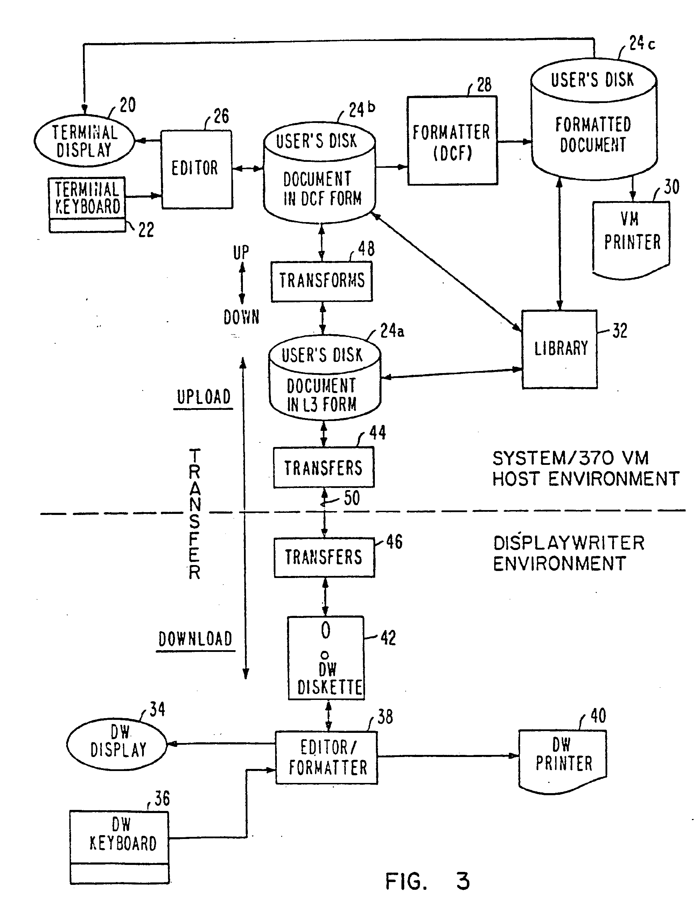

One possible interconnection arrangement that can be used to couple a host processor, a System/370 operating in a VM environment, and a stand-alone Displaywriter (DW) is shown in Figure 3. In the typical situation, a principal is provided with a terminal display 20, which includes a keyboard 22, both of which are coupled, as shown, to the host processor. In this example environment, the principal is also provided with other system capabilities, such as a disk 24, an editor 26 and, in this instance, a DCF (SCRIPT/VS) based formatter 28. Hard copy can be produced by spooling files to the system printer 30. In addition, if the need arises, the principal can access the system library 32 and download any appropriate file therefrom to the user disk 24. The library 32 is also available to the principal for archival storage purposes. The principal would create or edit a document by interacting with terminal 20 and keyboard 22, using any additional tools as needed.

The secretary, on the other hand, employs a Displaywriter to create and edit textual matter or documents. DW provides its own display 34 and keyboard 36. It is very easy to use because you see on the keyboard screen what you will get on the printer. A principal, on the other hand, is well served by the less expensive terminal 20, which is connected to the host data processing system. The principal has access to, among other host programs, the above-noted editor 26, DCF formatter 28 and other system supported premiums that can aid performance, such as PROFS (the Professional Office System). The L3 to DCF transform capability allows both secretaries and professionals to utilize their respective text processing and editing capabilities in a fully cooperative manner. It allows a professional to view and edit documents entered or edited by his or her secretary. A related DCF to L3 transform, which uses very different methods, and a facility for host control of the DW diskette files permits the secretary to view and edit documents entered or edited by the professional. In referring to the transfer of documents and the transformation of document files, "UP" will be used herein to indicate a transform from L3 to DCF and "DOWN" will be used to indicate a transform from DCF to L3. The term "upload" will be used to signify that the direction of information transfer is from DW to the host. The term "download" will be employed to signify that the direction of information transfer is from the host to DW. Further details of the DCF to L3 transform and the DW diskette control facility can be found respectively in copending European patent applications 83111222.2 and 83111223.0

The L3 to DCF transform is a difficult one because the two forms for representing an editable document are very different. While both forms represent letters, numbers, and symbols, in similar ways, although with some differences in code points, they also represent information about how these characters are to be formatted for printing on a page. However, the manner in which these two forms represent this formatting information differs in almost every possible respect. An L3 document, for example, encodes formatting information into approximately 200 different kinds of items, where an item is a first level structure, a second level structure, a parameter of one of these structures, a multi-byte control, a parameter of a multi-byte control, or a single-byte control. One specific example of an item is the single-byte control equal to hexadecimal '3A which is a Required Page End or RPE. This control tells the DW formatter to end a paragraph, to end indentation, and to put following text on the next page. A DCF document can contain about 120 different types of formatting controls. One such is ".PA" which tells the DCF formatter to end a paragraph and to put following text on a new page. Note that an RPE can not be transformed into a .PA because that does not end indentation. This illustrates the general fact that none of the most important L3 items have direct transformations into DCF. In this case, the transformation requires the simple addition of another DCF control ".IN O" to end indentation. In most cases, the transformation of a given L3 item is much more complex because it depends strongly on what L3 items came before the given item.

It is technically impossible to define a separate transformation of each L3 item for each possible set of items that came before it. Suppose the transformation of an L3 item could depend only on the last 6 items and that there were only 20 different kinds of items, which is a gross oversimplification. The number of possibilities for even the last 6 items, where each item can be one of 20 different types, is 64,000,000. Defining a correct transformation for each of 20 types of item, for each of these possible prior states, is out of the question. An actual L3 document has far more than that number of possible states that can exist at the time each item is encountered and is to be transformed.

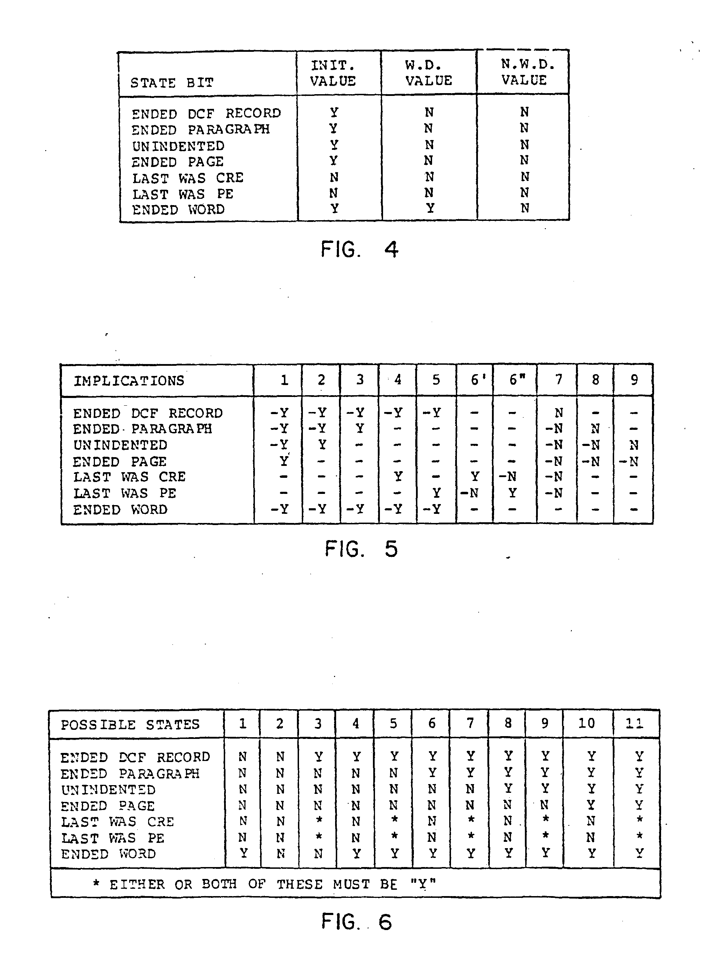

The transformation method disclosed here identifies seven binary state variables whose values, taken together, define the necessary state information for transforming the document. That is, the values of these seven state variables contain all the information, about what has come before an L3 item, that is necessary to transform the item into one or more DCF controls, and to set the next state. This next state is the state used by the transform mechanism to transform the next input item. Identifying these seven variables reduces the number of possible states to only the number of possible states of the seven binary variables, namely 128. The method disclosed here further identifies relations among the seven binary variables, see Figure 5. Existence of these relations reduces the number of possible states to 11. This fact is illustrated in Figure 6. Thus, the state at the beginning of a document is one of these 11 states, and any L3 item that occurs in one of these 11 states creates again one of these 11 states as "prior state" for the next L3 item. These relationships mean that the document can never reach the other 128 minus 11 or 117 states. Therefore, it is not necessary to specify how each L3 item would be transformed if it were encountered in any of the 117 impossible states.

The transformation of an L3 document into a DCF document is implemented by specifying the transformation that is to be applied to each L3 item in each of the 11 states, and by specifying the state change that is to take place when each item is encountered in each of the possible 11 states. It must be emphasized that nothing in an L3 document itself necessari ly identifies these state variables which were defined in an iterative fashion. Preliminary definitions had too few state variables and, hence, contained too little information about the prior state to allow transformation of some L3 items. Moreover, unnecessary state variables were included at the start and had to be discarded later.

Each stage in the iterative definition proceeds as follows. A useful-looking set of variables was selected, based on knowledge of the syntax and semantics of the input form, L3, and the output form, DCF. Then, the initial values of the variables to be assumed at the start of every document were defined and relations among the selected variables were discovered. Finally, an attempt was made to define the output item or items to be produced as the transformation of each L3 item occurring in each possible state and to also define the new state to be produced in each such case. When this proved impossible, another selection of state variables was made and the iteration was repeated until a completeable design was found.

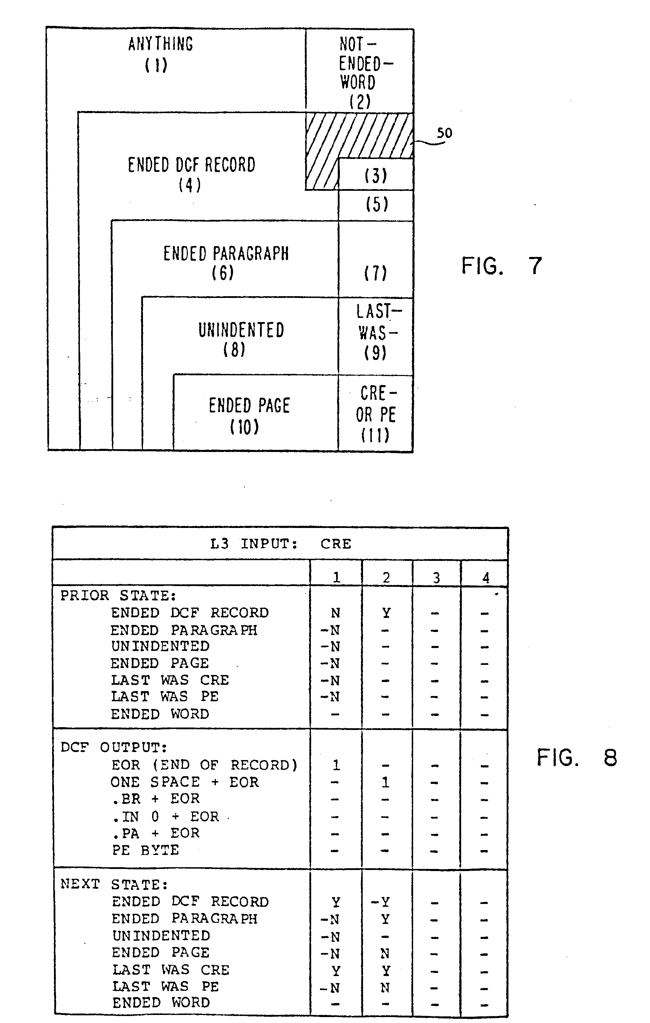

The seven binary variables that define the state of an L3 document at any point, are set forth in the table shown in Figure 4, along with their values at the start of any document (INIT.), after any word delimiter character (W.D.), and after any non-word delimiter character (N.W.D.). The relations among these variables take the form of implications. Avalue for one variable (yes or no) implies values of some other variables. The implications are given in the Figure 5 table, wherein a value preceded by a dash is implied by another value, shown without a dash, in the same column. The eleven states that are possible in the light of the above relations are represented by the eleven columns in the table depicted in Figure 6. The same information is contained in the overlapping of the rectangles in the state diagram illustrated in Figure 7. One overlap represents an impossible twelfth state. It is indicated by the hatched section 50. The numbers in the other overlaps correspond to column numbers in the above table. The state variables and relations disclosed herein, as previously noted, have been used to define the transformation from an L3 document to a DCF document. This transformation is described below and illustrated in the accompanying decision tables and state transition diagrams, which together constitute a preferred embodiment of the present invention.

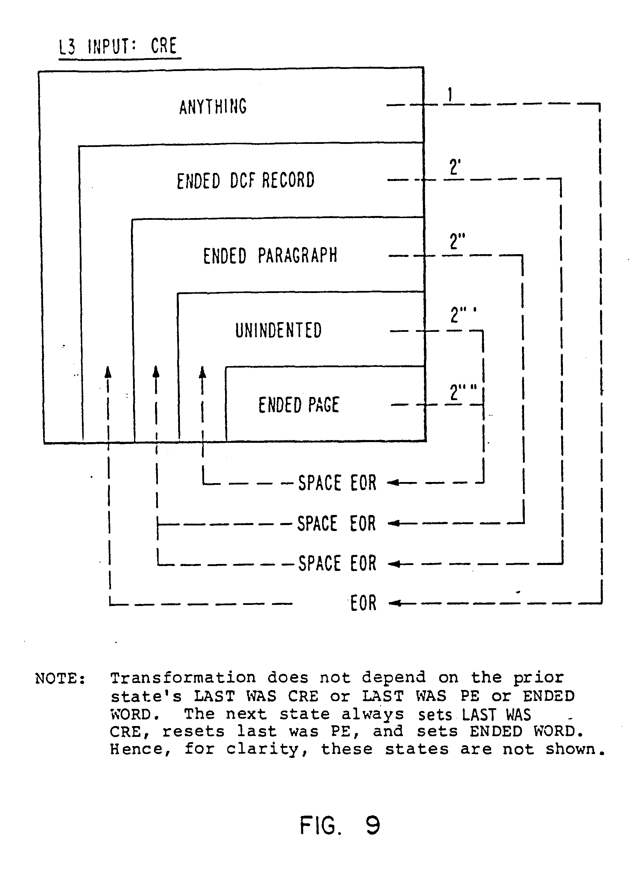

Referring to Figs. 8 and 9, a Carrier REturn or CRE moves the current position of the next printable character to be printed in the formatted document down one line and leftward to the temporary left margin. For condition 1, when CRE is present not after a line ender, i.e, an indication that the end of a line in the document to be formatted has been reached, the DCF output file is not at the start of a record. The DCF output that UP writes in response to a CRE in this case consists entirely of an End of Record or EOR, that is, UP ends the current DCF record. Since this CRE is not after a line ender, it is not after a CRE or a PE and therefore does not end a paragraph.

In the event of condition 2, when CRE is present after a line ender, the DCF output file is at the start of a new record. When that occurs, a CRE always causes a blank line; i.e., a DCF record containing one space character. This blank line is an implied paragraph ender in DCF, whether or not this CRE followed a previously encountered CRE. Therefore, astonish- ingly, it is not necessary to use the LAST WAS CRE state bit in this case to determine whether to end a paragraph, even though the rule that "a CRE that follows another CRE ends a paragraph" is an important true statement about L3. A CRE after any line ender ends a paragraph. Each PE follows a line ender, so this applies to the PE + CRE case as well.

ACRE resets ENDED PAGE. This is because appearance of anything except Page End in a Body Text vector, even a CRE, means that we are no longer immediately after a Required Page End. For example, the purpose of ENDED PAGE is to prevent the APM in the L3 sequence "... RPE PE TUP APM ..." from generating a second .PA control, a new page, and thereby producing the error of a blank page. However, the L3 sequence"... RPE CRE PE TUP APM ..." has a BLANK line after the RPE. Paginating on DW would put a PE between the RPE and the CRE. That would yield a blank page on a DW printer. Therefore, the correct transform of the L3 sequence "... RPE CRE PE TUP APM ..."has two .PAcontrols. The APM must imply that the last Text Unit meant to end with a RPE, whether it had one explicitly or not. Thus, the transformation of the APM must include a .PA control. This is assured if CRE resets the ENDED PAGE status bit. In fact, any of the controls whose algorithms follow, with the exception of ENDED PAGE, must reset the ENDED PAGE state bit for the same reason. The decision table for the L3 input CRE is shown in Figure 8. The state diagram for this decision table is illustrated in Figure 9.

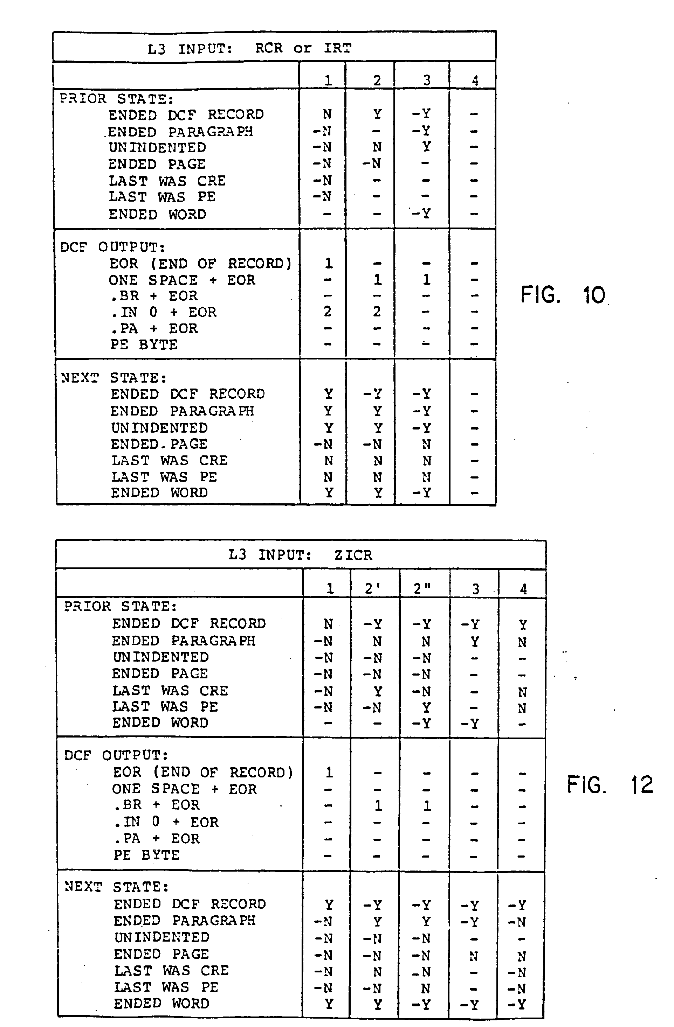

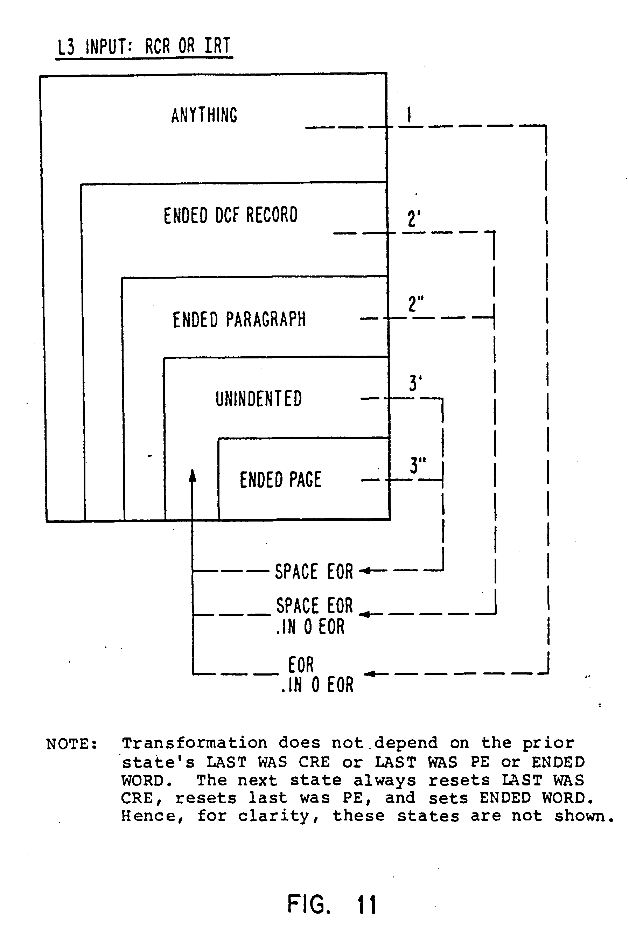

Referring to Figs. 10 and 11, either Required Carrier Return (RCR) or Index ReTurn (IRT) moves down one line and then left to the permanent left margin. That is, it ends a line, causes an EOR in DCF, ends a paragraph, causes a break, and unindents, causes a .IN 0. If one or more of these are already done, RCR or IRT refrains from writing redundant or incorrect duplicate controls. If they come after a line ender, then they leave a blank line by inserting a space before the EOR. For condition 1, if RCR or IRT are not after a line ender, the transform must end the DCF record, must end the paragraph and unindent, because these would not already have been done if a record had not been ended. In the case of condition 2', if RCR or IRT occur after another line ender but not after a paragraph ender, that transform must leave a blank line, end a paragraph, and unindent. For condition 2", the occurrence of RCR or IRT when a paragraph has been ended and hence after a line has been ended, but not after an unindent, the transform must leave a blank line and also unindent. Note that the .IN 0 control that unindents also ends a paragraph or causes a break. Hence, condition 2" cannot write any fewer DCF controls than condition 2' needs, and the same decision table rule can handle both of these cases. However, if RCR or IRT occurs after an unindent, the transform need only leave a blank line, whether or not RCR or IRT occur after a required page end. The decision table for the L3 inputs RCR or IRT is shown in Figure 10. The state diagram for this decision table is illustrated in Figure 11.

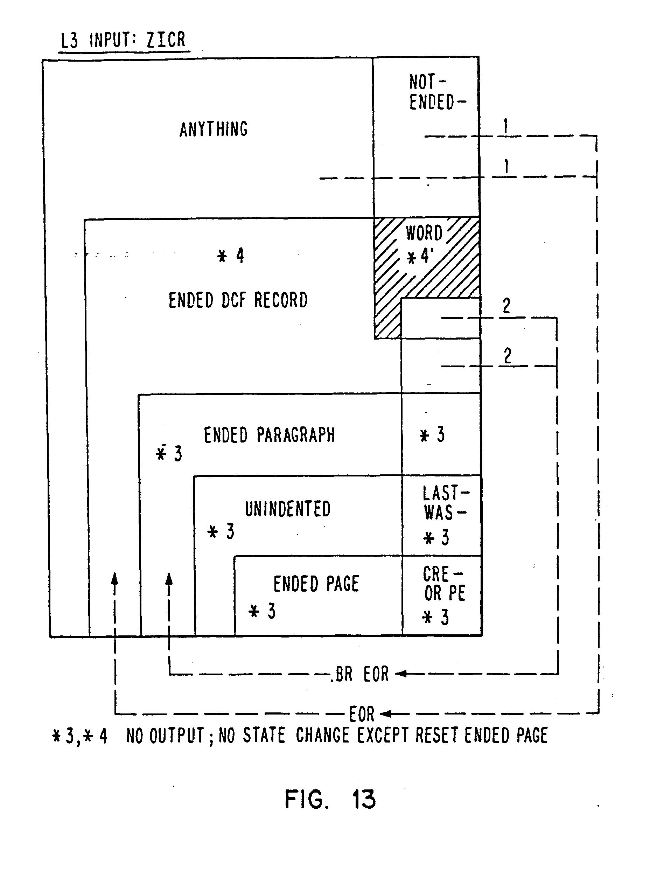

Referring to Figs. 12 and 13, a Zero Index Carrier Return (ZICR) moves the current position straight left to the temporary left margin. This motion is supported in DCF if, and only if, the current position is already at the temporary left margin, in which case the ZICR causes no motion at all. For condition 1, if ZICR occurs other than at the end of a record, it is transformed by default, like a CRE, that is, by ending the DCF record.

However, ZICR is not treated as a CRE so far as to let ZICR + ZICR end a paragraph. In instances of condition 2, the special cases of a ZICR following either a CRE or a PE, the transform causes a paragraph end (.BR) without unindenting. This is supported for both cases. It is supported for the CRE + ZICR case because the CRE moves down and left and the ZICR therefore causes no further motion. It is supported for the PE + ZICR case because any PE must follow a valid single-byte line ending control, the PE does not move the current position, and therefore the ZICR does not move the current position. The pair of controls CRE + ZICR or the pair of controls PE + ZICR transforms to .BR if the last paragraph has not already ended, in which case there will not have been an unindent. In this case, the transform sets ENDED PARAGRAPH and resets LAST WAS CRE or LAST WAS PE. It would be equally correct to leave LAST WAS CRE or LAST WAS PE set, because each of several ZICRs that happen to follow one of these can be thought of as ending a paragraph. This does not matter because the transform does not write redundant controls.

If ZICR occurs in any other situation, its only transformation is to reset ENDED PAGE. The other situations are as follows. Their completeness and consistency can be seen by noting that each region in the state diagram of Fig. 13 is covered by one and only one rule number (colored pencils help) or by giving the decision table to an analysis program. The transform for condition 3 is responsive to the case where ZICR comes after the end of a paragraph. If this occurs, whether or not ZICR comes after a CRE, nothing is done except reset ENDED PAGE. For condition 4, if ZICRcomes after a record has been ended, but the last L3 item is not a CRE or PE, do nothing except reset ENDED PAGE. Note that the case consisting of ENDED RECORD, not LAST WAS CRE and NOT ENDED WORD is impossible. To see this, first note that NOT ENDED WORD implies not ENDED PARAGRAPH. The only things that end a record without also ending a paragraph are CRE and ZICR. A PE looks as if it can do this; but, in fact, a PE itself must follow a line ender. Hence, the only L3 code that gives ENDED DCF RECORD, not ENDED PARAGRAPH, and not LAST WAS CRE is ZICR. However, ZICR does end a word. Therefore, NOT ENDED WORD is impossible along with ENDED DCF RECORD, not ENDED PARAGRAPH, and not LAST WAS CRE. Thus, many of the state diagrams, the state diagram of Figure 13 for example, contain a "P" shaped region that should be empty. It is labeled *4_{'} and is shown hatched in the ZICR state diagram. If this region were not empty, then ZICR would need a rule for handling that case by setting ENDED WORD. Since it is empty, its treatment is a "don't care" condition and it can be allowed to go along with the rest of rule 4. That is, the lower right entry in the decision table can be "-Y" instead of "Y". This relation among state variables looks just slightly accidental, so the possibility of this region's being non-empty is left in the state diagrams. None of the other algorithms are sensitive to whether or not this region is empty. The ZICR decision table is depicted in Figure 12.

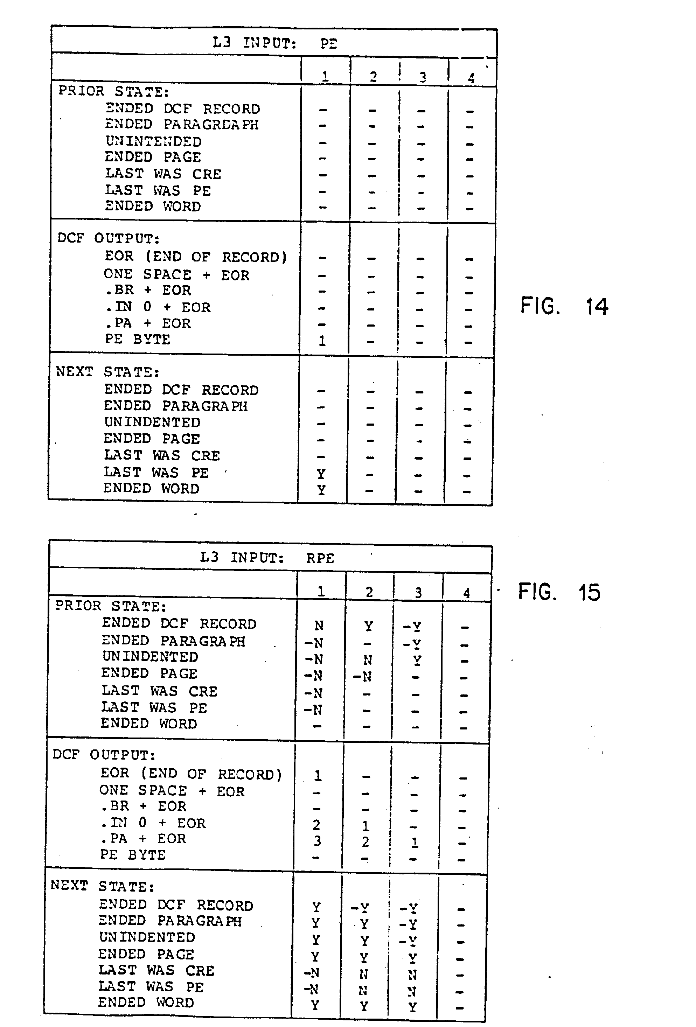

Referring to Fig. 14, the Page End (PE) single-byte control in L3, signals the end of a Text Unit and an optional end of a single page. It is "optional" because, in general, the paginator can move PEs to move page boundaries. DW processes a PE as if it were a CRE, except that a PE never leaves a blank line, although a PE always follows a valid single-byte control line ender. In L3, a PE is always followed by the end of the current Body Text vector. Unless this is the last Body Text vector, a Text Unit Prefix comes next followed by zero or more format-changing structures which can transform to several DCF controls.

When the transform mechanism receives a PE, hex 'OC', from the L3 data stream, it places a hex 'OC' into the DCF data stream, so that any subsequent DOWN transform can preserve preexisting pagination. This transformation is independent of the initial state. UP does not end a record after the PE byte. Doing so would give the DCF formatter a null record. This is because the 'OC' always goes at the start of a record, since the PE must follow a line ender in L3 and, in addition, because the DCF formatter ignores the OC byte altogether, since an implicit .TS OC // control is at the start of every document produced by UP.

Writing a PE byte into the DCF data stream begins a DCF record with a byte that the DCF formatter is told to ignore. The ENDED DCF RECORD state bit therefore need not be reset. If it had to be reset, then so would ENDED PARAGRAPH, UNINDENTED, and ENDED PAGE. In fact, RPE sets all of these (Fig. 15). The PE that follows the RPE absolutely must not reset them. The new state remembers that the last item in L3 was a PE so that the first character in the next Text Unit's Body Text can begin a new paragraph if necessary. The new state also remembers that the PE ended a word. The inability to hyphenate a word across a physical page boundary helps both text readers and text processing programmers.

A PE does not cause a .PA because it does not imply an author's requirement to start a new page. Therefore, PE does not set ENDED PAGE, which refers to a required page end. However, PE is the one thing in a Body Text vector that does not reset ENDED PAGE. In a paginated document, an RPE is always followed by a PE. Having PE reset ENDED PAGE would defeat the goal of remembering that a RPE was the last thing in a Body Text vector, so an AAM, for example, must not write out a .PA control. No state diagram is given for PE because a state diagram makes the transformation look much more complex than the decision table does. The decision table is illustrated in Figure 14.

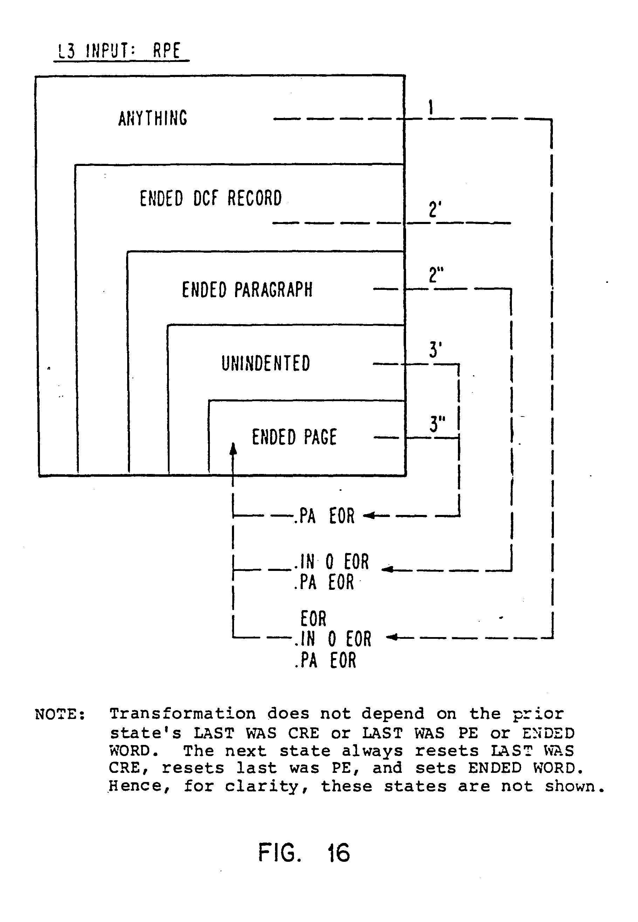

Referring to Figs. 15 and 16, a Required Page End (RPE) signifies an author's intent to begin a new page. It also ends a record, ends a paragraph, and causes unindenting, if these are not already done. DW processes an RPE like an RCR (Figs. 10, 11) except that an RPE does not normally cause a blank line, even after a line ender. UP transforms RPEs into DCF's .PA control to preserve author's intent, even though DW does not start a new page at an RPE unless the DW operator has requested pagination. The paginator puts a PE after each RPE, and the PE causes a new page.

The UP transformation depends on prior state only to determine which of the possible outputs would be redundant and are therefore not to be put into the DCF data stream. In particular, an RPE results in a .PA, even if the ENDED PAGE state bit is already set. This state bit is used to suppress generation of an erroneous, not just redundant .PA control, in response to APM or other structure that implies an RPE, but never generates a blank page. Several successive RPEs do express an author's intent to leave blank pages.

Note that the L3 sequence "Line ending control, RPE, no PE" will cause a blank line in L3 but not in the transformed document produced by UP. This will occur only in an unpaginated L3 document and is not considered to be an error in transformation. The decision table for the L3 input RPE is shown in Figure 15 and its related state diagram is illustrated in Figure 16.

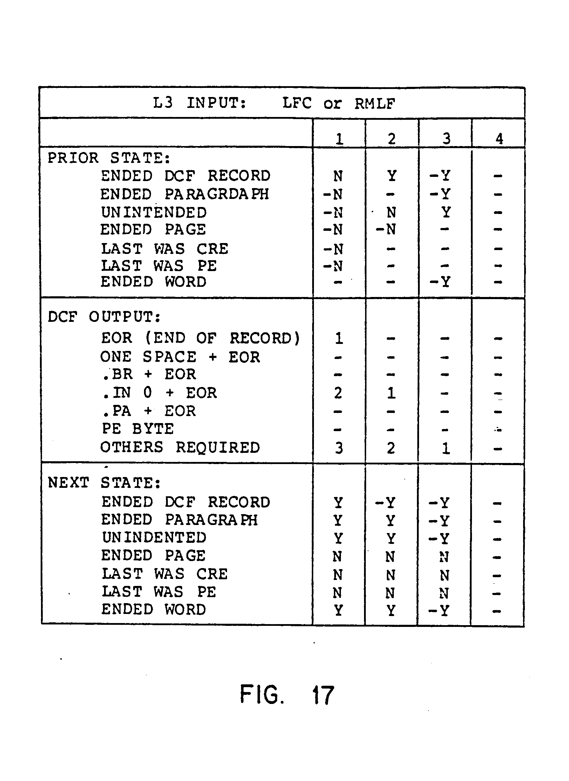

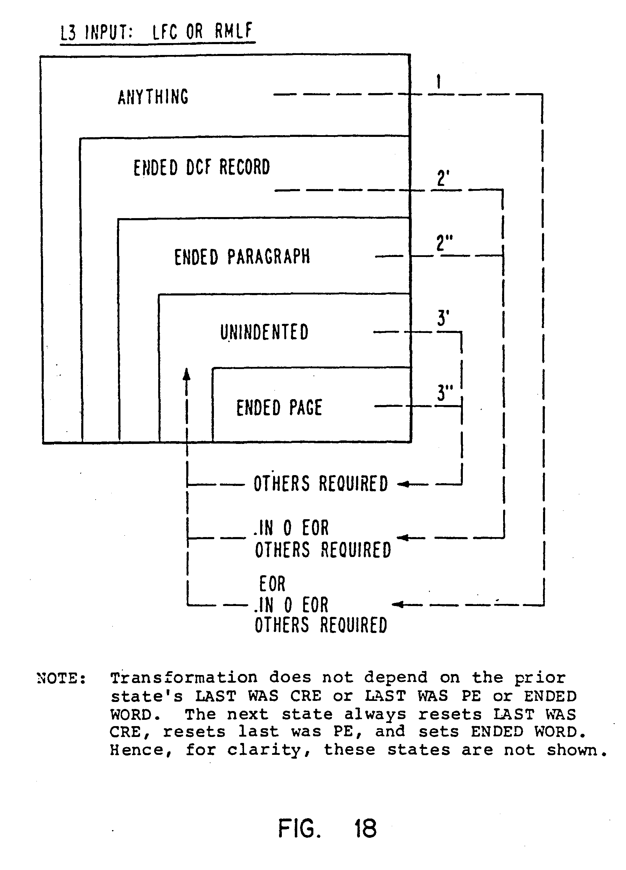

Referring to Figs. 17 and 18, either the Line Format Change (LFC) sequence of multi-byte controls, i.e., BLFC, SLP, STAB, and ELFC, or the Return to Master Line Format (RMLF) multi-byte control, should follow a line ender. In the UP transform, either of these L3 codes ends a DCF record, if it does not, for some reason, follow a line ender. It ends a paragraph, causes unindent, and ends a word, if any of these are necessary. However, the transform for LFC or RMLF never causes a blank line, even when it follows a line ender control.

Note that the SLP and STAB multi-byte controls in a LFC sequence, or the RTMF itself, can cause generation of several DCF controls. The break control, unindent control, or end of record generated for the LFC or RTMF as a whole, precede these "OTHERS REQUIRED", as shown in the decision table and state diagram of Figures 17 and 18, respectively.

A reasonable argument could be made for the idea that either LFC or RTMF could leave ENDED PAGE set, if either of these is the last code item in a Text Unit that otherwise ends with RPE and, if paginated, PE. However, this case makes no sense, because APM and the other structures that pay attention to ENDED PAGE all override the changes that an LFCora RMLF makes. Hence, forsimplicity, LFC and RTMF will reset the ENDED PAGE state bit.

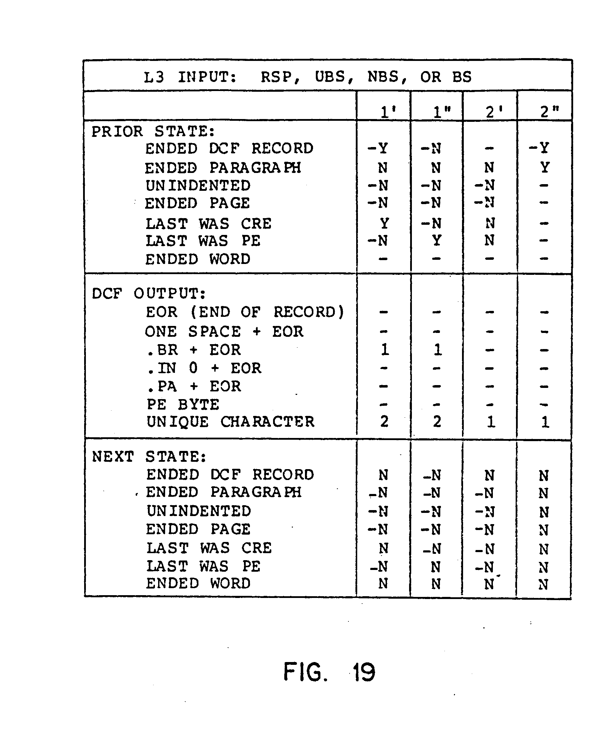

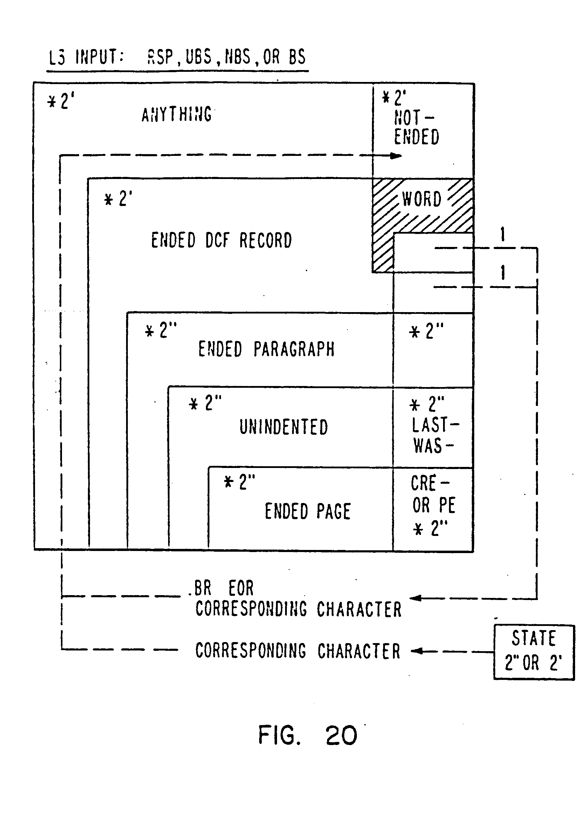

Referring to Figs. 19 and 20, any of the Required SPace, Unit BackSpace, Numeric BackSpace and BackSpace single-byte controls in L3 (RSP, UBS, NBS or BS) starts a new paragraph when it follows a CRE ora a PE. Otherwise, it does not even cause a line end or a word end. This is very different from other paragraph delimiters. Any other paragraph delimiter ends the old paragraph. Any one of RSP, UBS, NBS, or BS, if it follows CRE or PE and if a paragraph has not just ended, begins a new paragraph.

The difference is that the next state produced by one of these has all of the state bits reset. After one of these L3 codes has been transformed into the output DCF data stream, we are not at the end of a DCF record, because this character is in the record, we are not at the end of a paragraph (instead, we are one character into the new paragraph), we are not necessarily unindented because a user is free to edit in an indentation here and we cannot be at the required end of a page. There is one unusual case that does occur here. A UBS is ignored by the DCF formatter. It is possible to generate a record containing just a UBS byte which will be treated as a null record.

UP transforms each of RSP, UBS, NBS, and BS into its corresponding character in DCF. That is, in DCF, the byte is equal to the single-byte control in L3. For condition 1, if one of these follows a CRE or a PE, but ENDED PARAGRAPH is not already set, then UP writes out a .BR control, ends that record, puts the corresponding character in the new record, and resets all the state bits. For condition 2, if one of these follows neither a CRE nor a PE, or if ENDED PARAGRAPH is already set, then UP just writes the corresponding character and resets all of the state bits. The fact that UP can write the same simple output for conditions or rules 1 and 2 below, results from the following line of reasoning.

It should be noted that one of RSP, UBS, NBS, and BS that "follows" a PE may follow the PE at a considerable distance. Any PE ends a Text Unit (TU). The new TU may have an APM, TUFC, MT, MP, or other format-setter before its Body Text vector. Any format-setter always ends a line, ends a paragraph, unindents and, by implication, ends a page. Hence, the case where RSP, UBS, NBS, or BS follows a PE and yet ENDED PARAGRAPH is false, can occur only when the Text Unit's BT vector started without a format-setter. In this case, the DCF output is left with a record that contains only a PE byte.

A .TS OC // control is implied at the start of any document UP generates. This control tells the DCF formatter to ignore a PE byte, hex'OC'. If UP wrote out an EOR and then a .BR, it would leave the DCF formatter with a record containing only the PE byte. The DCF formatter would treat that as a null record with undesirable results. At the start of a new Body Text vector, UP transforms graphic characters without first ending a record. It must, however, refrain from starting with an EOR for RLM, RSP, UBS, NBS, or BS, even though what it writes out first in response to the new Body Text vector is a control. The DCF formatter will recognize the control as a control because the DCF formatter ignores the PE byte that is in "column" one and sees the .BR as starting in "column" one.

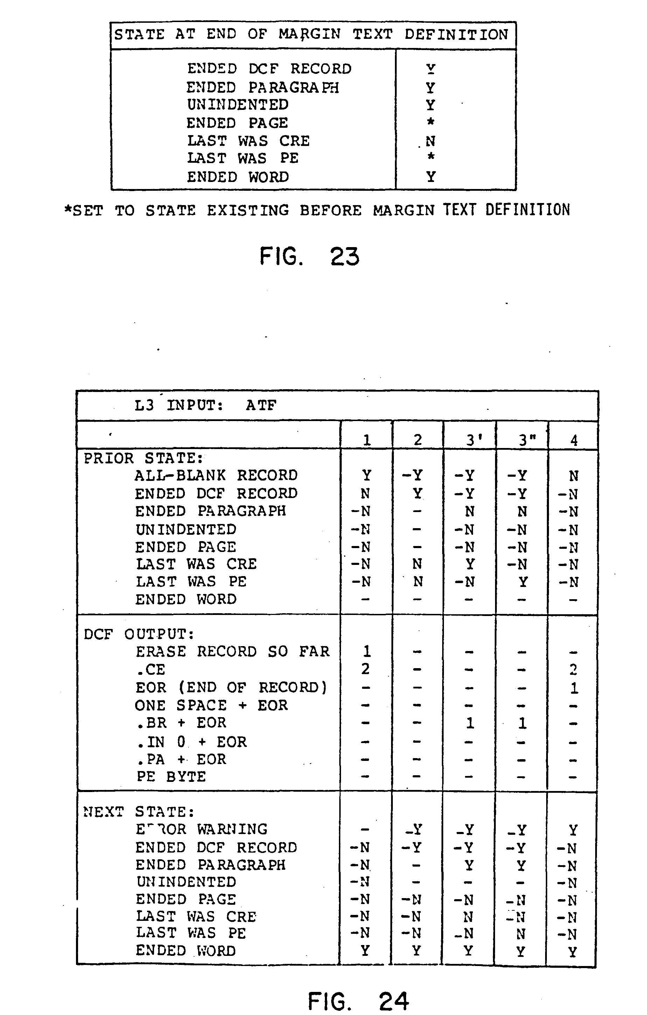

Any of several other codes in L3 also ends a paragraph when it follows a CRE or a PE, but does not require a special transformation. Any of IT, SP, HT, or NSP also ends a paragraph when it follows CRE or PE, but it needs no special transformation. An IT transforms into a .IN h control when the IT follows a CRE. Any of the others, transforms into a SPACE or a TAB in DCF, and a DCF record that starts with a SPACE or a TAB is treated as an automatic break. An ATF also ends a paragraph when it follows a CRE or a PE, but it has its own, albeit imperfect, transformation for this case (Fig. 24). Either of CRE or ZICR also ends a paragraph when it follows a CRE or PE, but CRE and ZICR are delimiters in their own right and have separate algorithms (Figs. 8, 12). Release Left Margin (RLM) also ends a paragraph when it follows CRE or PE, but it can not be generated in DW. The decision table for L3 inputs RSP, UBS, NBS or BS is shown in Figure 19. The related state diagram is depicted in Figure 20.

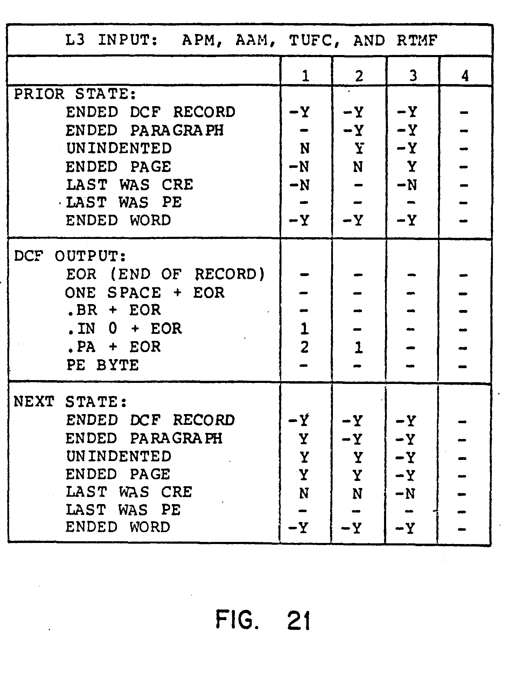

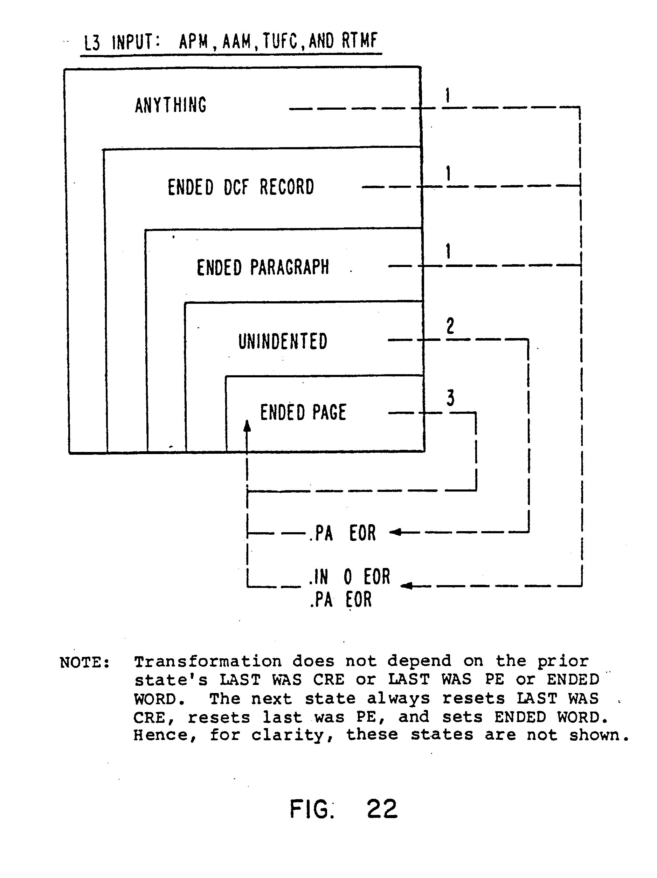

Referring to Figs. 21 and 22, any of the first level structures Activate Primary Master (APM)-, i.e., use the PMF, Activate Alternate Master (AAM), i.e., use the AMF, Text Unit Format Change (TUFC), i.e., use format given in the structure itself, and Return To Master Format (RTMF), i.e., use whichever of PMF and AMF was in use most recently, implies a Required Page End (RPE) in the preceding Text Unit, whether an RPE was actually there or not. If not, and if this is not the start of the document, then the UP transform has not already written a .PA control into the DCF data stream and UP must do so in response to this structure.

These structures can not occur in a Body Text vector. They must occur after a PE or at the start of a document. L3 architecture says that they end a paragraph when they follow a PE. This is uninteresting because requiring a page end implies requiring unindenting, ending a paragraph, and ending a record. UP need not test whether one of these structures follows a PE, because it always either follows a PE or is at the start of a document. However, UP must know the prior state to avoid writing out redundant or wrong controls.

In particular, writing out a second successive .PA in response to one of these structures that follows a RPE control is wrong because that would leave a blank page in the DCF document that was not present in the L3 document. Moreover, two of these structures can occur together. No more than one of them must transform to a .PA control, for the same reason. The mechanism for accomplishing this uses the ENDED PAGE state bit. RPE and these structures set this bit. Whenever it is set, it prevents these structures, but not RPE, from writing .PA.

Writing .IN 0 is redundant if, at the point where this control appears, we have already ended a paragraph and unindented. Ending a record is wrong if we have already ended a record, because that causes a null record and perhaps a blank line. This structure may appear right after a PE control, which is then the only item in the DCF record, because a PE mustfollow a line ending control, which leaves ENDED DCF RECORD set, or after DCF controls written into the data stream in response to another one of these structures. Each such DCF control is followed by an EOR, leaves ENDED DCF RECORD reset, and leaves others as is. This structure must not cause a blank line or a null record. Therefore, after a PE, this structure's resultant DCF controls must go in the same record as the PE itself. This is normal. The controls in the decision tables show where EORs go, and the EORs tend to go at the end of controls, not before them. The decision table for L3 inputs APM, AAM, TUFC and RTMF is depicted in Figure 21. The related state diagram is illustrated in Figure 22.

UP transforms the other L3 items (single-byte controls, multi-byte controls, second level structures, first level structures, and parameters of these structures, independently of these state bits). However, many L3 items must reset these state bits. For example, the first graphic character after an RPE control must reset all of the state bits because we are no longer at the end of a record, we are no longer at the end of a paragraph, we are no longer at the required end of a page, the last control was not CRE, the last control was not PE, and after editing, there can be a non- zero indent tab level.

Multi-byte controls not mentioned above do not set or reset the state bits, single-byte controls exceeding X'41' do not set or reset the state bits, and structures not mentioned do not set or reset the state bits. Note that NSP (X'El') and SHY (X'CA') are treated separately.

Referring to Fig. 23, redefinition of margin text can occur only after a TUFC, APM, AAM, or RTMF first level structure, between a PE and the next Text Unit's Body Text vector. The APM, AAM and RTMF structures define a return to margin text that was transformed from L3 to DCF previously, so no text transformation is done in the middle of the document in response to one of these structures. Very little information about the state left by the preceding Body Text needs to be preserved across transformation of the L3 that redefines margin text. This is because the TUFC, APM, AAM, or RTMF implies a required page end and hence implies the value of all of the state bits.

The transformation of text at the start of the next Body Text vector depends on the fact that it is the first text in a Text Unit, but that this is not the first text unit of the document. This is signified by the LAST WAS PE bit's being on. UP saves LAST WAS PE before it starts transforming margin text, and restores the initial value afterward.

The presence or absence of an RPE at the end of the prior Text U n it's Body Text vector, just before the PE that ended that Text Unit, affects the transformation of margin text and would affect the transformation of one of APM, AAM, RTMF, or TUFC if that could follow the definition of margin text. The information about whether or not there was a final RPE is contained in the ENDED PAGE bit. Again, UP saves the value of ENDED PAGE before starting to transform margin text. With these exceptions, UP can simply set all state bits to a given state after transforming margin text. That given state is the same as the initial state- for a document and is tabulated in Figure 23.

Thus, UP can use the same state bits for transforming Margin Text vectors that it uses for transforming Body Text vectors. Before starting to transform a Margin Text vector, UP simply resets each state bit to its initial value. The transformations of delimiters are the same. UP need not even check for the few controls that are not allowed in margin text since they won't be there.

Two situations require UP to back up and change DCF code it has already generated. Neither of these situations require UP to back up beyond the record that it is preparing, so a reasonable implementation uses the fact that UP buffers the last record in main store before writing it out on a disk. The two situations that require backing up are Word UnderScore orWUS and Align Text Field or ATF.

WUS is a single-byte control that appears in Body Text to cause uderscoring of the previous word. UP has no precognition that this will be necessary when UP starts processing the word that is to be underscored. UP transforms the WUS itself into the DCF control .US OFF to end underscoring at the end of the word. That is easy. The most difficult aspect of this task is to start the underscoring at the start of the preceding word.

There are two reasonable approaches to starting underscoring. In the first, UP keeps each word in a separate buffer until it sees whether a WUS follows the word. If so, UP writes .US ON into the DCF data stream before writing the word into the DCF data stream. UP could perform this word buffering in either the input L3 data stream or the output DCF data stream. UP keeps the entire last record of DCF output available and is always prepared to go back and insert a .US ON just after the most recent WUS delimiter. In the second approach, UP saves a pointerto the position in the buffer of the most recent WUS delimiter, to avoid the necessity to scan back for it.

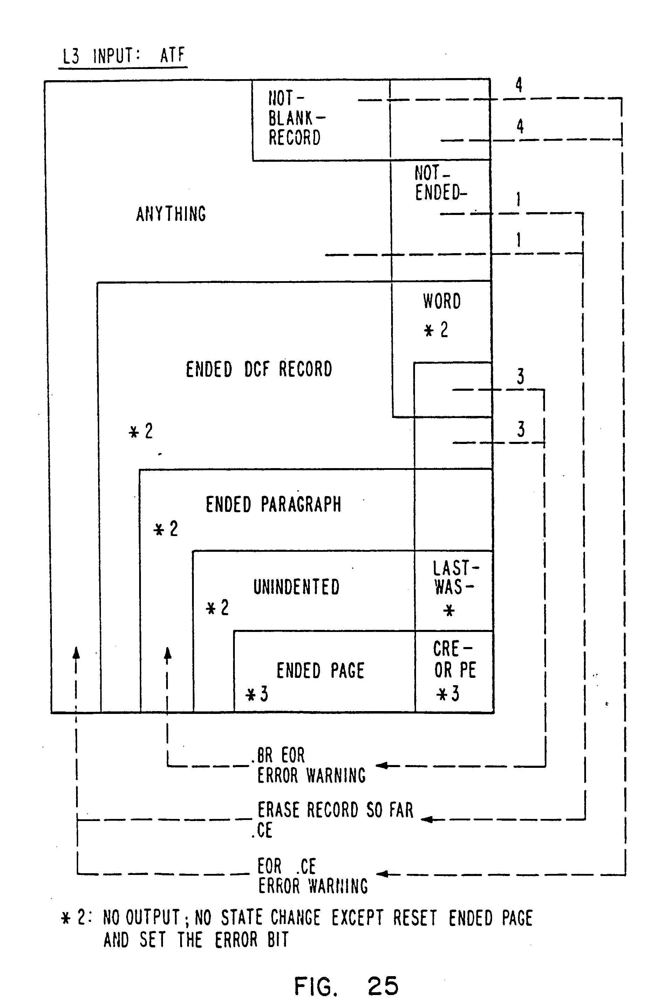

Referring to Figs. 24 and 25, ATF is a multi-byte L3 control that can center any field about the point of the ATF control, whereas all that DCF's .CE control can do is center an entire line about the middle of the current typing area. As a result, the only use of ATF that UP can transform correctly is the case where L3 contains a line ender, roughly 33 SP (space) characters, RSP (Required SPace) characters, or the equivalent HT (Horizontal Tab) characters, and then the ATF. The text that is to be centered follows the ATF and ends at the next line ender.

The transform mechanism handles this L3 sequence by discarding the record that contains only blank text and beginning the record over again with a .CE control and no additional EOR. The end of the text to be centered takes care of itself at the next line ender.

This requirement has only one reasonable solution which is implemented as rule 1, see the state transform diagram of Figure 25. UP keeps each output DCF record until something in L3 transforms to an End Of Record in DCF, then commits the record. When UP gets an ATF, it looks to see whether the record it has been building up contains at least one space and nothing other than spaces, required spaces and tab characters. If both of these conditions are satisfied, then UP returns to the start of that record, puts in .CE, and proceeds with ordinary transformation. UP could avoid scanning by keeping track of whether it has put anything except spaces, required spaces and tab characters in the current record. Any other transformation of AFT sets the bit that warns an operator that transformation was not perfect.

The second condition concerning text field alignment is handled in a similar manner. If UP gets an ATF when it has just ended a DCF record, UP notes that the operator is trying to center text around the left margin and therefore does not try to center anything. This is what DW does. Condition 3, however, requires awareness of whether a DCF record has ended. As a special case of an ATF when UP has just ended a DCF record, UP does obey the rule that an ATF after a CRE or a PE ends a paragraph. UP always obeys the rule that ATF ends a word.

If UP gets an ATF when it has put non-blank characters in the current output DCF record, a condition 4 case, UP ends the record, it generates an EOR, starts the new record with a .CE control, sets an error warning bit, and proceeds. This is as effective a transformation of L3's centering a field that is only part of a line, as DCF is capable of.

The latter algorithm also handles the fact that a second ATF is, itself, a delimiterforthe field centered by a previous ATF. The second ATF appears when a record contains the previous ATF and its text. Therefore, UP transforms the second ATF to an EOR and a .CE that starts the next record. That EOR ends the text centered by the previous ATF.

Although the present invention has been described in the context of a preferred embodiment thereof, it will be readily apparent to those skilled in the appertaining art, that modifications and variations can be made therein without departing from its scope. Accordingly, it is not intended that the present invention be limited to the specifics of the foregoing description of the preferred embodiment. Instead, the present invention should be considered as being limited solely by the appended claims, which alone are intended to define its scope.

## Claims

1. A method of transforming text
which is represented in the form of digital data wherein a source document, cast in a first editable form which includes a plurality of input control items therein, is transformed to a target document, cast in a second editable form which includes output control items compatible therewith, said method comprising the steps of:
a) determining (Fig. 4) a set of key state variables from amongst all possible state variables, that refers to and collectively identifies the status of said source document as represented by the input control items in a data stream of said source document at any given point in said transformation;
b) determining, on the basis of relations among the said key state variables taking the form of implications (Fig. 5), those combinations of key states (Fig. 6) which, in the light of these relations, can occur in, and are meaningful for, any possible transformation;
c) defining (Figs. 8, 10, 12, 14, 15, 17, 19, 21, 24) for each status, in combination with each of said input control items, an explicit set of output control items compatible with said second editable document form to be placed in a data stream of said target document; and
d) digitally processing the text by defining (Figs. 8, 10, 12, 14, 15, 17, 19, 21, 24), after each explicit set of output control items has been placed in the data stream of said target document, the next status of said source document, for consideration of said next status when a next input control item is to be transformed.

2. The method according to claim 1 which comprises the additional step of determining the actual starting status of said source document prior to enabling said transformation thereof.

3. The method according to claim 1 or 2 which comprises the additional step of determining the presence of sub-documents within said source document and thereafter preserving the next status of said source document for use after transformation of said sub-document has occurred.

## Patentansprüche

1. Verfahren zur Umwandlung von Text,
der in Form digitaler Daten dargestellt ist,
wobei ein Quelldokument, das in einem ersten editierbaren Format, welches eine Vielzahl von Eingabesteuerobjekten enthält, erstellt worden ist, in ein Zieldokument umgewandelt wird, das ein zweites editierbares Format besitzt, welches eine Vielzahl dazu kompatibler Ausgabesteuerobjekte enthält,
wobei das Verfahren folgende Schritte umfaßt:
a) Bestimmen (Fig. 4) eines Satzes von Schlüsselstatusvariablen aus allen möglichen Statusvariablen, der den Status des Quelldokuments entsprechend der Eingabesteuerobjekte in einem Datenstrom des Quelldokuments an jeder beliebigen gegebenen Stelle der Umwandlung widerspiegelt und gemeinsam identifiziert;
b) Bestimmen von jenen Kombinationen von Schlüsselzuständen (Fig. 6), die im Hinblick auf Zusammenhänge zwischen den Schlüsselstatusvariablen in Form von Verknüpfungen (Fig. 5) bei einer eventuell möglichen Umwandlung vorkommen können und dafür von Bedeutung sind, auf der Grundlage dieser Zusammenhänge;
c) für jeden Status Festlegen (Fig. 8, 10, 12, 14,15,17,19,21,24) in Verbindung mit jedem der Eingabesteuerobjekte eines ganz bestimmten Satzes aus Ausgabesteuerobjekten, die zu dem zweiten editierbaren Dokumentenformat kompatibel sind, der in einen Datenstrom des Zieldokuments eingebracht werden soll; und
d) digitales Verarbeiten des Textes dadurch, daß, nachdem der jeweilige ganz bestimmte Satz aus Ausgabesteuerobjekten in den Datenstrom des Zieldokuments eingebracht worden ist, der nächste Status des Quelldokuments festgelegt wird (Fig. 8, 10, 12, 14, 15, 17, 19, 21, 24), damit dieser nächste Status bei der Umwandlung des nächsten Eingabesteuerobjekts berücksichtigt werden kann.

2. Verfahren gemäß Anspruch 1, das den zusätzlichen Schritt enthält, daß der tatsächliche Anfangsstatus des Quelldokuments bestimmt wird, bevor dessen Umwandlung erlaubt wird.

3. Verfahren gemäß Anspruch 1 oder 2, das den zusätzlichen Schritt enthält, daß das Vorliegen von Unterdokumenten im Quelldokument festgestellt wird und daß danach der nächste Status des Quelldokuments erhalten bleibt, damit er nach der Umwandlung des Unterdokuments verwendet werden kann.

## Revendications

1. Une méthode de transformation de texte
qui est représenté sous la forme de données numériques
dans laquelle un document de source établi dans une première forme éditable qui comprend, à l'intérieur, une pluralité d'articles de contrôle d'entrée, est transformé en un document cible établi dans une seconde forme éditable qui comprend des articles de contrôle de sortie compatibles avec ceux ci,
ladite méthode comprenant les étapes suivantes:
a) la détermination (figure 4) d'un ensemble de variables d'états clés parmi toutes les variables d'états possibles, qui se rapporte à, et identifie collectivement le statut dudit document de source tel que représenté par les articles de contrôle d'entrée dans un flot de données dudit document de source en n'importe quel point donné de ladite transformation,
b) la détermination, sur la base de relations parmi lesdites variables d'états clés prenant la forme d'implications (figure 5), des combinaisons d'états clés (figure 6) qui, au vu de ces relations, peuvent apparaître dans, et être significatives pour toute transformation possible,
c) la définition (figures 8, 10, 12, 14, 15, 17, 19, 21, 24) pour chaque statut, en combinaison avec chacun desdits articles de contrôle d'entrée, d'un ensemble explicite d'articles de contrôle de sortie compatibles avec ladite seconde forme de document éditable à placer dans un flot de données dudit document cible, et
d) le traitement numérique du texte en définissant (figures 8, 10, 12, 14, 15, 17, 19, 21, 24), après que chaque ensemble explicite d'articles de contrôle de sortie ait été placé dans le flot de données dudit document cible, le statut suivant dudit document de source, pour tenir compte dudit statut suivant lorsqu'un article de contrôle suivant doit être transformé.

2. La méthode selon la revendication 1 qui comprend l'étape supplémentaire de détermination du statut de départ réel dudit document de source avant de permettre la transformation de celui ci.

3. La méthode selon la revendication 1 ou 2 qui comprend l'étape supplémentaire de détermination de la présence de sous-documents dans ledit document de source et ensuite la préservation du statut suivant dudit document de source à utiliser après que la transformation desdits sous-documents ait été exécutée.
